# FASCICULE DE BREVET EUROPEEN

(11) **EP 2 928 707 B1**
(45) Date de publication et mention de la délivrance du brevet: **04.10.2017**
(21) Numéro de dépôt: 13802920.2
(22) Date de dépôt: 02.12.2013
(51) Int. Cl.: B60C 11/00

(54) **PNEUMATIQUE COMPORTANT UNE BANDE DE ROULEMENT CONSTITUÉE DE PLUSIEURS MÉLANGES ELASTOMÉRIQUES**
REIFEN MIT EINEM LAUFSTREIFEN BESTEHEND AUS MEHREREN ELASTOMERISCHEN MISCHUNGEN
TIRE WITH A TREAD CONSISTING OF SEVERAL ELASTOMERIC MIXTURES

(30) Priorité: 10.12.2012 FR 1261835
(43) Date de publication de la demande: 14.10.2015
(73) Titulaire: Compagnie Générale des Etablissements Michelin, 63000 Clermont-Ferrand (FR)
(72) Inventeur: GAYTON, Christophe, 63040 Clermont-Ferrand Cedex 9 (FR); GERVAIS, Philippe, 63040 Clermont-Ferrand Cedex 9 (FR); REHAB, Hichem, 63040 Clermont-Ferrand Cedex 9 (FR)
(74) Mandataire: Le Cam, Stéphane Georges Elie
(86) Numéro de dépôt international: PCT/EP2013/075247
(87) Numéro de publication internationale: WO 2014/090621

(56) Documents cités:
- EP-A1- 2 457 743
- FR-A1- 2 952 855
- JP-A- H1 148 263

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'augmenter encore la durée de vie des pneumatiques, il est usuelle de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Des pneumatiques ainsi réalisés sont tout à fait satisfaisants pour les applications routières précitées. Pour assurer la possibilité d'effectuer un rechapage, il est toutefois recommandé d'éviter une dégradation trop importante du matériau interne, celui-ci présentant une usure relativement rapide comparée à celle du matériau externe, pour ne pas risquer un endommagement de l'armature du pneumatique.

Le document FR 2 952 855 décrit un pneumatique selon le préambule de la revendication 1 ; il décrit une bande de roulement constituée de trois couches radialement superposées faisant intervenir trois matériaux différents pour obtenir des compromis de performances d'usure de résistance aux chocs et d'endurance.

En conséquence, l'utilisation de la bande de roulement de tels pneumatiques ne peut pas être totalement optimisée au risque de compromettre les possibilités de rechapage du pneumatique.

Les inventeurs se sont ainsi donnés pour mission d'être en mesure de fournir des pneumatiques autorisant une distance de roulage toujours plus importante avant d'envisager un rechapage et dont les montées en température dans la zone du sommet sont limitées pour satisfaire les performances hystérétiques recherchées.

Ce but a été atteint selon l'invention par un pneumatique, à armature de carcasse radiale, comprenant une armature de sommet, elle-même coiffée radialement d'une bande de roulement dont la sculpture comporte au moins trois rainures circonférentielles, réunie à deux bourrelets par l'intermédiaire de deux flancs, ladite bande de roulement comprenant au moins trois couches de mélanges élastomériques radialement superposées, un premier mélange élastomérique constituant la première couche formant la partie radialement extérieure de la bande de roulement présentant une valeur maximale de tan(δ), noté tan(δ)max, supérieure à 0.110, un deuxième mélange élastomérique constituant la deuxième couche radialement intérieure et au contact de la dite première couche de mélange élastomérique présentant une valeur maximale de tan(δ), noté tan(δ)max au moins 10 % inférieure à celle du premier mélange élastomérique, la troisième couche radialement la plus intérieure de la bande de roulement étant constituée d'au moins deux premières parties et d'au moins trois deuxièmes parties axialement, chacune au contact d'au moins une desdites au moins deux premières parties, lesdites au moins deux premières parties axialement centrées sur un plan radial passant par une desdites au moins trois rainures circonférentielles étant constituées du deuxième mélange élastomérique et lesdites au moins trois deuxièmes parties étant constituées d'un troisième mélange élastomérique présentant une valeur maximale de tan(δ), noté tan(δ)max, au moins 10 % inférieure à celle du deuxième mélange élastomérique.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'une éprouvette constituée de deux pastilles cylindriques de 2 mm d'épaisseur chacune et d'un centimètre de diamètre (l'éprouvette est réalisée à partir de prélèvements sur pneumatique réalisé à mi-hauteur de la couche concernée au plus près de la zone du plan équatorial dans une zone d'épaisseur suffisante pour constituer l'éprouvette), soumis à une sollicitation sinusoïdale en cisaillement simple alterné, à la fréquence de 10Hz, à une température de 60°C. On effectue un balayage en amplitude de déformation de 0,1 à 50% crête-crête (cycle aller), puis de 50% à 1% crête-crête (cycle retour). Les résultats exploités sont le module complexe de cisaillement dynamique (G*) et le facteur de perte tan(δ). Pour le cycle aller, on indique la valeur maximale de tan(δ) observée, noté tan(8)ₘₐₓ.

La résistance au roulement est la résistance qui apparaît lorsque le pneumatique roule et révèle la montée en température dudit pneumatique. Elle est ainsi représentée par les pertes hystérétiques liées à la déformation du pneumatique durant une révolution. Les valeurs de tan(δ) des matériaux utilisés sont mesurées à 10Hz entre 30 et 100°C pour intégrer l'effet des différentes fréquences de déformation induites par la révolution du pneumatique. La valeur de tan(δ) à 60°C correspond ainsi à un indicateur de la résistance au roulement du pneumatique en roulage.

Les inventeurs ont tout d'abord su mettre en évidence que la combinaison des différents mélanges élastomériques tels que décrits précédemment permet de conduire à un compromis entre les propriétés de résistance à l'usure et les montées en température au niveau du sommet du pneumatique satisfaisant pour les usages routiers tels que décrits précédemment. En effet, la combinaison des différents mélanges telle que décrite permet de diminuer l'hystérèse globale du pneumatique, les mélanges élastomériques radialement les plus intérieurs compensant les propriétés hystérétiques élevées du mélange radialement le plus extérieur. En effet, le mélange radialement le plus extérieur choisi par exemple pour ses propriétés de rigidité conduisant à des performances en matière d'usure élevées favorise les montées en température de la bande de roulement.

La deuxième couche de mélange élastomérique présente selon l'invention une hystérèse permettant de limiter les montées en température et peut être choisi avec des propriétés de rigidité conduisant à une performance en termes d'usure satisfaisante en fin de vie de la bande de roulement, ladite couche pouvant être au contact du sol après usure de la première couche.

Le choix de ce deuxième mélange est en outre favorable aux performances en termes de résistance au roulement du pneumatique.

Avantageusement selon l'invention, la valeur maximale de tan(δ), noté tan(δ)max, du deuxième mélange élastomérique est au moins 40 % inférieure à celle du premier mélange élastomérique.

La troisième couche radialement la plus intérieure est constituée pour partie du troisième mélange élastomérique qui contribue encore à une limitation des montées en température de la bande de roulement et améliore les propriétés de résistance au roulement du pneumatique.

Avantageusement selon l'invention, la valeur maximale de tan(δ), noté tan(δ)max du troisième mélange élastomérique est au moins 20 % inférieure à celle du deuxième mélange élastomérique.

Le choix des mélanges permettant d'obtenir les propriétés hystérétiques recherchées de ce troisième mélange conduit usuellement à des propriétés en termes de cohésion peu favorables aux performances en termes d'usure du pneumatique. Les inventeurs ont encore su mettre en évidence que la constitution décrite précédemment de la troisième couche constituée pour parties du deuxième mélange élastomérique permet d'éviter les contacts entre le sol et ce troisième mélange en fin de vie de la bande de roulement. En outre, la présence du deuxième mélange élastomérique dans les parties de la troisième couche axialement centrées sur des plans radiaux passant par des rainures circonférentielles permet d'envisager un recreusage de la bande de roulement avant un éventuel rechapage et donc assure une distance de roulage toujours plus importante avant rechapage.

Pour des raisons de bon fonctionnement de la sculpture d'un pneumatique, l'étape de recreusage peut être limitée à certaines rainures présentes sur un pneumatique neuf, le comportement et/ou les effets escomptés n'étant pas les mêmes en fonction de l'usure du pneumatique, l'épaisseur de la bande de roulement évoluant. En conséquence, il est tout à fait possible que le nombre de premières parties de la troisième couche soit inférieur au nombre de rainures présentes sur le pneumatique neuf. Lesdites premières parties de la troisième couche ne sont présentes que radialement à l'intérieur de rainures destinées à être recreusées.

Au sens de l'invention, la cohésion d'un mélange caoutchouteux est appréciée à partir des mesures de contrainte par établissement d'une courbe force/allongement en cassage.

Les contraintes à la rupture (en MPa) et les allongements à la rupture (en %) sont également mesurés. Les mesures de traction pour déterminer les propriétés de rupture sont effectuées à la température de 60°C ± 2°C, et dans les conditions normales d'hygrométrie (50 ± 5% d'humidité relative), selon la norme française NF T 40-101 (décembre 1979).

Selon un mode de réalisation préféré de l'invention, le premier mélange élastomérique constituant la première couche radialement la plus extérieure de la bande de roulement présente un module G* supérieur à 1.7 MPa.

De telles valeurs de rigidité du premier mélange élastomérique sont particulièrement favorables pour les propriétés d'usure de la bande de roulement et contribue favorablement à la distance parcourue par ladite bande de roulement avant rechapage.

De préférence encore selon l'invention, le deuxième mélange élastomérique constituant la deuxième couche présente un module G* supérieur à 1.2 MPa.

Un tel deuxième mélange élastomérique offre un compromis tout à fait favorable entre les performances en termes d'usure et de montée en température du mélange élastomérique.

Une variante avantageuse de l'invention prévoit que le deuxième mélange élastomérique présente une valeur maximale de tan(δ), noté tan(δ)max, comprise entre 0.060 et 0.110.

Ces valeurs confèrent au deuxième mélange des propriétés d'hystérèse suffisantes pour diminuer de manière notable les températures de la bande de roulement.

Avantageusement encore, le troisième mélange élastomérique présente une valeur maximale de tan(δ), noté tan(δ)max inférieure à 0.060.

De telles valeurs de tan(δ)max du troisième mélange favorise encore un fonctionnement du pneumatique avec des températures de la bande de roulement favorables à une meilleure endurance du pneumatique ainsi que des performances en termes de résistance au roulement améliorées.

Selon une variante avantageuse de l'invention, le rapport du volume du premier mélange élastomérique sur la somme des volumes des trois mélanges élastomériques est compris entre 25 et 70 %.

Avantageusement également, le rapport du volume du deuxième mélange élastomérique sur la somme des volumes des trois mélanges élastomériques est compris entre 10 et 40 %.

Le profil de la deuxième couche, constituée du deuxième mélange élastomérique, vu selon une coupe méridienne du pneumatique est tel que celui-ci apparaisse sensiblement simultanément sur toute la largeur de la bande de roulement lors de l'usure de ladite bande de roulement. Le concepteur du pneumatique saura définir un tel profil en fonction de la dimension et de l'usage du pneumatique.

Avantageusement encore, le rapport du volume du troisième mélange élastomérique sur la somme des volumes des trois mélanges élastomériques est inférieur à 25%.

Ces rapports volumiques des différentes couches vont permettre au concepteur d'un pneumatique de faire varier le compromis entre les performances d'usure, celles de résistance au roulement et éventuellement celles d'endurance selon les besoins tout en restant dans le cadre de l'invention.

Selon l'invention, les mesures de volume précitées sont réalisées sur des pneumatiques à l'état neuf, n'ayant pas roulés et donc ne présentant aucune usure de la bande de roulement.

Une variante de l'invention prévoit encore une quatrième couche radialement la plus intérieure et au contact de l'armature de sommet avantageusement constituée d'un mélange élastomérique identique au troisième mélange élastomérique. La présence de cette quatrième couche peut permettre d'éviter des problèmes de collant du deuxième mélange élastomérique avec le métal, celui-ci constituant les parties de la troisième couche radialement au contact des rainures. En effet, les propriétés recherchées pour ce deuxième mélange élastomérique peuvent conduire à des choix de mélanges dont les propriétés d'adhérence sur le métal sont dégradées par rapport à d'autres mélanges.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

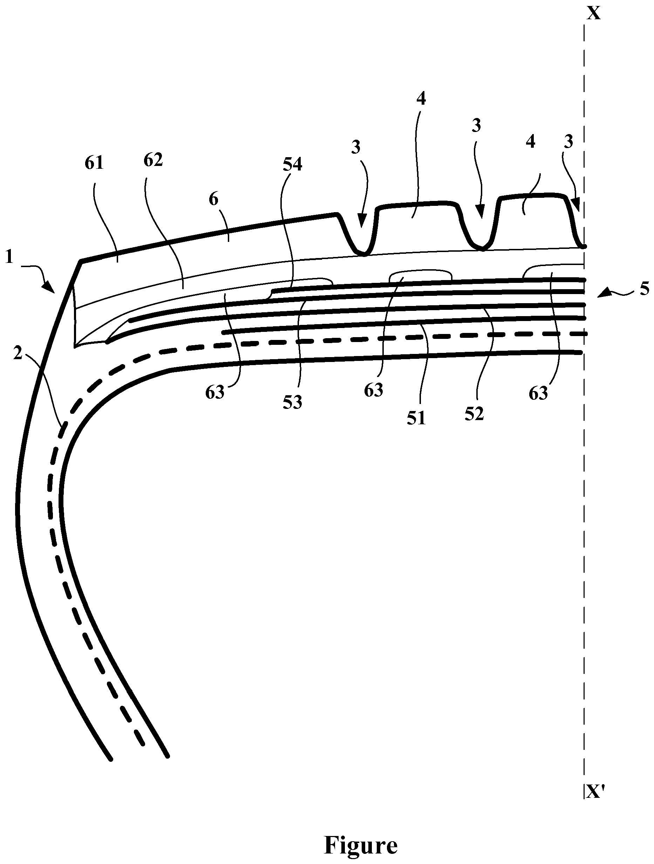

D'autres détails et caractéristiques avantageux de l'invention ressortiront ci-après de la description d'exemples de réalisation de l'invention en référence à la figure qui représente une vue méridienne d'un schéma d'un pneumatique selon un mode de réalisation de l'invention,

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 275/70 R 22.5, comprend une armature de carcasse radiale 2 ancrée dans deux bourrelets, autour de tringles, non représentées sur la figure. L'armature de carcasse 2 est formée d'une seule couche de câbles métalliques. L'armature de carcasse 2 est frettée par une armature de sommet 5, elle-même coiffée d'une bande de roulement 6. La bande de roulement comporte cinq rainures 3 formant six ribs 4.

Les zones basses et bourrelets du pneumatique 1 ne sont notamment pas représentés sur la figure.

Sur la figure, l'armature de sommet 5 est formée radialement de l'intérieur à l'extérieur :
- d'une couche de triangulation 51 formée de câbles métalliques inextensibles 9.28 non frettés, continus sur toute la largeur de la nappe, orientés d'un angle égal à 65°,
- d'une première couche de travail 52 formée de câbles métalliques inextensibles 11.35 non frettés, continus sur toute la largeur de la nappe, orientés d'un angle égal à 26°,
- d'une seconde couche de travail 53 formée de câbles métalliques inextensibles 11.35 non frettés, continus sur toute la largeur de la nappe, orientés d'un angle égal à 18° et croisés aux câbles métalliques de la première couche de travail,
- d'une couche de protection 54 formée de câbles métalliques élastiques 18.23 non frettés, continus sur toute la largeur de la nappe, orientés d'un angle égal à 18° dans le même sens que les câbles métalliques de la couche de travail 53.

Conformément à l'invention, la bande de roulement 6 est constituée d'une première couche, constituée d'un premier mélange élastomérique 61, radialement extérieure qui vient au contact du sol, d'une deuxième couche radialement au contact de la première couche, constituée d'un deuxième mélange élastomérique 62, et d'une troisième couche radialement la plus intérieure formée de quatre parties constituées du deuxième mélange 62, formant la deuxième couche, et de cinq parties constituées d'un troisième mélange 63.

La premier mélange élastomérique 61 présente une valeur tan(δ)max égale à 0.135 et donc supérieure à 0.110. Par ailleurs, ce premier mélange élastomérique 61 présente un module G* égal à 1.7 MPa qui lui confère des propriétés en termes d'usure satisfaisant pour les applications visées.

Le deuxième mélange élastomérique 62 présente une valeur tan(δ)max égale à 0.080 et donc bien inférieure d'au moins 10 % à celle du premier mélange élastomérique 61. Ce deuxième mélange élastomérique 62 présente un module G* égal à 1.65 MPa qui confère des propriétés satisfaisantes en termes d'usure, notamment en fin de vie de la bande de roulement.

Le troisième mélange élastomérique 63 présente une valeur maximale de tan(δ), noté tan(δ)max, égale à 0.045. Ce troisième mélange élastomérique 63 forme cinq parties, de la couche radialement la plus intérieure de la bande de roulement, distantes des parois des rainures 3 d'au moins 1 mm.

La rainure 3 passant par le plan circonférentiel n'est pas prévue pour être recreusée. Cela explique la présence d'une partie du troisième mélange élastomérique 63 axialement continue radialement à l'intérieur de cette rainure 3. Ce choix de sculpture en fin de vie du pneumatique qui ne comporte plus alors que quatre rainures permet d'optimiser la quantité du mélange élastomérique 63 et donc la performance de résistance au roulement.

Le rapport du volume du premier mélange élastomérique 61 sur la somme des volumes des trois mélanges élastomériques est égal à 64 %.

Le rapport du volume du deuxième mélange élastomérique 62 sur la somme des volumes des trois mélanges élastomériques est égal à 19 %.

Le rapport du volume du troisième mélange élastomérique 63 sur la somme des volumes des trois mélanges élastomériques est égal à 17 %.

Des pneumatiques ont été réalisés sur la base des trois mélanges élastomériques décrits ci-dessous avec certaines de leurs propriétés.

| | Mélange A | Mélange B | Mélange C |
|---|---|---|---|
| NR | 80 | 100 | 100 |
| BR | 20 | | |
| N234 | 48 | | |
| N683 | | | 35 |
| Silice 165 m2/G | | 50 | 10 |
| N330 / Agent de couplage | | 5/5 | 1/1 |
| Agent de recouvrement | | | |
| Anti Oxydant | 3 | 2.5 | 1 |
| PARAFFINE | 1 | 1 | |
| ACIDE STEARIQUE | 2 | 2.5 | 1.5 |
| ZNO | 3 | 3 | 4.5 |
| SOUFRE | 1.5 | 1.5 | 1.5 |
| Accélérateur (CBS) | 0.9 | 1.8 | 1.4 |
| G*50%cc/60°C/10Hz (MPa) | 1.7 | 1.65 | 1.4 |
| tan(δ)ₘₐₓ | 0.135 | 0.080 | 0.045 |

Le premier pneumatique est un pneumatique de référence R réalisé selon une configuration correspondant à des réalisations usuelles telles que décrites précédemment constituée de deux couches radialement superposées, la couche radialement intérieure étant formée d'un seul mélange élastomérique. Il associe un mélange A présent radialement à l'extérieur de la bande de roulement et un mélange C radialement intérieur. Le volume du mélange C est défini usuellement par l'homme du métier pour que la température de fonctionnement du pneumatique corresponde au roulage envisagé avec un tel pneumatique. Dans le cas présent, le volume du mélange C représente 17 % de la somme des volumes des mélanges A et C.

Un pneumatique T conforme à l'invention et tel que décrit sur la figure associe, pour former la bande de roulement, le mélange A qui forme la partie radialement extérieure et correspond au premier mélange 61, le mélange B, qui correspond au deuxième mélange 62 et le mélange C qui correspond au troisième mélange 63.

Pour effectuer une comparaison, des essais similaires sont effectués avec les deux pneumatiques.

Les premiers essais ont consisté à évaluer la distance parcourue par les pneumatiques avant d'effectuer un rechapage.

Les essais sont réalisés dans des conditions de charge et vitesse définis pour conduire à une usure de la bande de roulement du pneumatique de référence R autorisant son rechapage après un kilométrage, auquel on attribue la valeur 100, parcouru dans lesdites conditions de ce test. La performance en usure est évaluée sur un véhicule poids lourd lors de roulages sur route ouverte sur des parcours représentatifs des usages classiquement observés sur des véhicules poids lourd. Des valeurs inférieures à 100 expriment une performance en usure inférieure.

Les résultats obtenus sont présentés dans le tableau suivant :

| | Pneumatique R | Pneumatique T |
|---|---|---|
| Usure | 100 | 95 |

Ces résultats montrent que le pneumatique selon l'invention autorise un roulage sensiblement équivalent à celui du pneumatique de référence avant d'effectuer un rechapage.

Des mesures de résistance au roulement ont également été effectuées sur chacun des pneumatiques dans des conditions de roulage identiques. Les résultats des mesures sont présentés dans le tableau suivant ; elles sont exprimées en Kg/t, une valeur de 100 étant attribuée au pneumatique R. Des valeurs inférieures à 100 expriment une performance en résistance au roulement supérieure.

| Pneumatique R | Pneumatique T |
|---|---|
| 100 | 90 |

Ces valeurs mettent en évidence l'intérêt du pneumatique selon l'invention en termes de résistance au roulement. La présence du mélange B permet d'améliorer les températures de fonctionnement du pneumatique.

Le pneumatique ainsi défini selon l'invention a donc permis de décaler le compromis entre performance d'usure et résistance au roulement en faveur de la résistance au roulement, la performance d'usure n'étant que très faiblement impactée.

En outre, l'absence du mélange C à proximité des rainures de la bande de roulement autorise une étape de recreusage pour recréer des rainures avant d'envisager l'étape de rechapage.

L'invention ne doit pas être interprétée comme étant limitée à une telle conception. En effet, le pneumatique selon l'invention peut être défini pour viser un autre compromis et par exemple viser une amélioration encore plus sensible de la résistance au roulement en acceptant une perte en termes de performance usure tout en conservant une faculté de recreusage plus importante que le pneumatique de référence.

## Revendications

1. Pneumatique (1), à armature de carcasse radiale (2), comprenant une armature de sommet (5), elle-même coiffée radialement d'une bande de roulement (6), réunie à deux bourrelets par l'intermédiaire de deux flancs, ladite bande de roulement (6) comprenant au moins trois couches de mélanges élastomériques (61, 62, 63) radialement superposées, un premier mélange élastomérique (61) constituant la première couche formant la partie radialement extérieure de la bande de roulement (6) présentant une valeur maximale de tan(δ), noté tan(δ)max, supérieure à 0. 110, un deuxième mélange élastomérique (62) constituant la deuxième couche radialement intérieure et au contact de la dite première couche de mélange élastomérique (61) présentant une valeur maximale de tan(δ), noté tan(δ)max au moins 10 % inférieure à celle du premier mélange élastomérique (61), un troisième mélange élastomérique (63) constituant au moins une partie de la troisième couche radialement la plus intérieure de la bande de roulement (6) présentant une valeur maximale de tan(δ), noté tan(δ)max, au moins 10 % inférieure à celle du deuxième mélange élastomérique (62), **caractérisé en ce que** la bande de roulement (6) comporte au moins trois rainures circonférentielles (3), **en ce que** ladite troisième couche est constituée d'au moins deux premières parties et d'au moins trois deuxièmes parties axialement, chacune au contact d'au moins une desdites au moins deux premières parties, **en ce que** lesdites au moins deux premières parties axialement centrées sur un plan radial passant par une desdites au moins trois rainures circonférentielles (3) sont constituées du deuxième mélange (62) et **en ce que** lesdites au moins trois deuxièmes parties sont constituées du troisième mélange élastomérique (63).

2. Pneumatique (1) selon la revendication 1, **caractérisé en ce que** le premier mélange élastomérique (61) constituant la première couche radialement la plus extérieure de la bande de roulement présente un module G* supérieur à 1.7 MPa.

3. Pneumatique (1) selon la revendication 1 ou 2, **caractérisé en ce que** deuxième mélange élastomérique (62) constituant la deuxième couche présente un module G* supérieur à 1.2 MPa.

4. Pneumatique (1) selon l'une des revendications 1 à 3, **caractérisé en ce que** le deuxième mélange élastomérique (62) présente une valeur maximale de tan(δ), noté tan(δ)max comprise entre 0.060 et 0.110.

5. Pneumatique (1) selon l'une des revendications 1 à 4, **caractérisé en ce que** le troisième mélange élastomérique (63) présente une valeur maximale de tan(δ), noté tan(δ)max inférieure à 0.060.

6. Pneumatique (1) selon l'une des revendications 1 à 5, **caractérisé en ce que** le rapport du volume du premier mélange élastomérique (61) sur la somme des volumes des trois mélanges élastomériques (61, 62, 63) est compris entre 25 et 70 %.

7. Pneumatique (1) selon l'une des revendications 1 à 6, **caractérisé en ce que** le rapport du volume du deuxième mélange élastomérique (62) sur la somme des volumes des trois mélanges élastomériques (61, 62, 63) est compris entre 10 et 40 %.

8. Pneumatique (1) selon l'une des revendications 1 à 7, **caractérisé en ce que** le rapport du volume du troisième mélange élastomérique (63) sur la somme des volumes des trois mélanges élastomériques (61, 62, 63) est inférieur à 25 %.

## Patentansprüche

1. Reifen (1) mit radialer Karkassenbewehrung (2), die eine Scheitelbewehrung (5) aufweist, die selbst radial von einem Laufstreifen (6) überdeckt ist, der über zwei Flanken mit zwei Wülsten verbunden ist, wobei der Laufstreifen (6) mindestens drei Schichten aus elastomerischen Mischungen (61, 62, 63) aufweist, die radial überlagert sind, wobei eine erste elastomerische Mischung (61) die erste Schicht bildet, die den radial äußeren Teil des Laufstreifens (6) bildet, die einen Maximalwert von tan (δ), der mit tan(δ)max bezeichnet wird, von über 0,110 aufweist, wobei eine zweite elastomerische Mischung (62) die zweite radial innere Schicht bildet, die in Kontakt mit der ersten Schicht aus elastomerischer Mischung (61) ist, die einen Maximalwert von tan (δ), der mit tan(δ)max bezeichnet wird, aufweist, der mindestens 10 % niedriger als jener der ersten elastomerischen Mischung (61) ist, wobei eine dritte elastomerische Mischung (63) mindestens einen Teil der dritten radial innersten Schicht des Laufstreifens (6) bildet, die einen Maximalwert von tan (δ), der mit tan(δ)max bezeichnet wird, aufweist, der mindestens 10 % niedriger als jener der zweiten elastomerischen Mischung (62) ist, **dadurch gekennzeichnet, dass** der Laufstreifen (6) mindestens drei Längsrillen (3) aufweist, dass die dritte Schicht aus mindestens zwei ersten Teilen und aus mindestens drei zweiten Teilen gebildet ist, die jeweils mit mindestens einem der mindestens zwei ersten Teile axial in Kontakt sind, dass die mindestens zwei ersten Teile, die axial auf einer radialen Ebene zentriert sind, die durch eine der mindestens drei Längsrillen (3) verläuft, aus der zweiten Mischung (62) gebildet sind und dass die mindestens drei zweiten Teile aus der dritten elastomerischen Mischung (63) gebildet sind.

2. Reifen (1) nach Anspruch 1, **dadurch gekennzeichnet, dass** die erste elastomerische Mischung (61), die die erste radial äußerste Schicht des Laufstreifens bildet, ein Modul G* von über 1,7 MPa aufweist.

3. Reifen (1) nach Anspruch 1 oder 2, **dadurch gekennzeichnet, dass** die zweite elastomerische Mischung (62), die die zweite Schicht bildet, ein Modul G* von über 1,2 MPa aufweist.

4. Reifen (1) nach einem der Ansprüche 1 bis 3, **dadurch gekennzeichnet, dass** die zweite elastomerische Mischung (62) einen Maximalwert von tan (δ), der mit tan(δ)max bezeichnet wird, aufweist, der zwischen 0,060 und 0,110 beträgt.

5. Reifen (1) nach einem der Ansprüche 1 bis 4, **dadurch gekennzeichnet, dass** die dritte elastomerische Mischung (63) einen Maximalwert von tan (δ), der mit tan(δ)max bezeichnet wird, aufweist, der niedriger als 0,060 ist.

6. Reifen (1) nach einem der Ansprüche 1 bis 5, **dadurch gekennzeichnet, dass** das Verhältnis des Volumens der ersten elastomerischen Mischung (61) zu der Summe der Volumina der drei elastomerischen Mischungen (61, 62, 63) zwischen 25 und 70 % beträgt.

7. Reifen (1) nach einem der Ansprüche 1 bis 6, **dadurch gekennzeichnet, dass** das Verhältnis des Volumens der zweiten elastomerischen Mischung (62) zu der Summe der Volumina der drei elastomerischen Mischungen (61, 62, 63) zwischen 10 und 40 % beträgt.

8. Reifen (1) nach einem der Ansprüche 1 bis 7, **dadurch gekennzeichnet, dass** das Verhältnis des Volumens der dritten elastomerischen Mischung (63) zu der Summe der Volumina der drei elastomerischen Mischungen (61, 62, 63) niedriger als 25 % ist.

## Claims

1. Tyre (1) with a radial carcass reinforcement (2), comprising a crown reinforcement (5) itself capped radially by a tread (6) connected to two beads by two side walls, the said tread (6) comprising at least three radially superposed layers of elastomeric compounds (61, 62, 63), a first elastomeric compound (61) constituting the first layer forming the radially outer part of the tread (6) having a maximum value of tan(δ), denoted tan(δ)max, greater than 0. 110, a second elastomeric compound (62) constituting the second layer radially on the inside of and in contact with the said first layer of elastomeric compound (61) having a maximum value of tan(δ), denoted tan(δ)max, at least 10% lower than that of the first elastomeric compound (61), a third elastomeric compound (63) constituting part of the radially innermost third layer of the tread (6) having a maximum value of tan(δ), denoted tan(δ)max, at least 10% lower than that of the second elastomeric compound (62) **characterized in that** the tread comprises at least three circumferential grooves (3), **in that** the said radially innermost third layer of the tread consists of at least two first parts and of at least three second parts axially, each one in contact with at least one of the said at least two first parts, **in that** the said at least two first parts axially centred on a radial plane passing through one of the said at least three circumferential grooves (3) consist of the second compound (62) and **in that** the said at least three second parts consist of the third elastomeric compound (63).

2. Tyre (1) according to Claim 1, **characterized in that** the first elastomeric compound (61) constituting the radially outermost first layer of the tread has a G* modulus greater than 1.7 MPa.

3. Tyre (1) according to Claim 1 or 2, **characterized in that** the second elastomeric compound (62) constituting the second layer has a G* modulus greater than 1.2 MPa.

4. Tyre (1) according to one of Claims 1 to 3, **characterized in that** the second elastomeric compound (62) has a maximum value of tan(δ), denoted tan(δ)max, of between 0.060 and 0.110.

5. Tyre (1) according to one of Claims 1 to 4, **characterized in that** the third elastomeric compound (63) has a maximum value of tan(δ), denoted tan(δ)max, less than 0.060.

6. Tyre (1) according to one of Claims 1 to 5, **characterized in that** the ratio of the volume of the first elastomeric compound (61) to the sum of the volumes of the three elastomeric compounds (61, 62, 63) is between 25 and 70%.

7. Tyre (1) according to one of Claims 1 to 6, **characterized in that** the ratio of the volume of the second elastomeric compound (62) to the sum of the volumes of the three elastomeric compounds (61, 62, 63) is between 10 and 40%.

8. Tyre (1) according to one of Claims 1 to 7, **characterized in that** the ratio of the volume of the third elastomeric compound (63) to the sum of the volumes of the three elastomeric compounds (61, 62, 63) is less than 25%.
